# EUROPEAN PATENT APPLICATION

(11) **EP 1 004 631 A2**
(43) Date of publication of application: **31.05.2000**
(21) Application number: 99123346.1
(22) Date of filing: 23.11.1999
(51) Int. Cl.: C08L 83/04, C08L 23/20

(54) **Vibration-proof rubber composition**

(30) Priority: 24.11.1998 JP 33254098
(71) Applicant: Dow Corning Toray Silicone Company, Ltd., Chiyoda-ku, Tokyo 100-0005 (JP)
(72) Inventor: Ushio, Yoshito, 2-2,Chigusa Kaigan Ichibara-shi Chiba (JP); Irie, Masakazu, 2-2,Chigusa Kaigan Ichibara-shi Chiba (JP)
(74) Representative: Patentanwälte Sternagel & Fleischer

(57) **Abstract**

A vibration-proof rubber composition, comprising (A) a polydiorganosiloxane having at least two silicon atom-bonded alkenyl groups per molecule; (B) polyisobutylene in an amount such that the weight ratio of this component and component (A) is 10:90 to 80:20; (C) 3 to 500 weight parts of an inorganic filler per 100 weight parts of components (A) and (B) combined; (D) a polyorganosiloxane having at least two silicon atom-bonded hydrogen atoms per molecule in an amount such that the ratio of the number of moles of silicon atom-bonded hydrogen atoms in this component is 0.3 to 20 in relation to the number of moles of alkenyl groups in components (A) and (B) combined; and (E) a platinum catalyst comprising 0.1 to 1000 weight parts of platinum metal atoms per 1,000,000 weight parts of components (A) and (B) combined.

## Description

### BACKGROUND OF INVENTION

The present invention relates to a vibration-proof rubber composition, and more particularly to a vibration-proof rubber composition that cures by hydrosilylation to form a rubber having excellent shape retention properties and superior vibration proofing characteristics at high temperatures and across a wide range of frequencies.

Known methods for improving the vibration proofness of a silicone rubber obtained by hydrosilylation-induced curing in the presence of a platinum catalyst include those in which the content of silicon atom-bonded alkenyl groups in an alkenyl group-containing polydiorganosiloxane (which is the principal component of the silicone rubber composition for forming the aforementioned rubber) is reduced, an uncross-linked polydiorganosiloxane is added, and the content of the cross-linking agent in this composition is reduced or the like, yielding a slightly cured, low-hardness silicone rubber called a silicone gel. The low-hardness silicone rubber thus obtained is disadvantageous, however, in that it has poor shape retention properties and a limited range of applications.

A vibration-proof rubber composition obtained by adding polyisobutylene to a silicone rubber composition cured with organic peroxides is disclosed in Japanese Unexamined Patent Application (Kokai) 54-41957, but there is no mention of a hydrosilylation-curing silicone rubber composition.

As a result of thoroughgoing research aimed at addressing the aforementioned problems, the inventors perfected the present invention upon discovering that the combined use of an inorganic filler in a hydrosilylation-curing silicone rubber composition makes it possible to control the separation of the added polyisobutylene, to provide the cured rubber with comparatively high hardness and excellent shape retention properties, and to form rubber having excellent vibration proofing characteristics at high temperatures and across a wide range of frequencies.

Specifically, it is an object of the present invention to provide a vibration-proof rubber composition that cures by hydrosilylation to provide a rubber having excellent shape retention properties and superior vibration proofing characteristics at high temperatures and across a wide range of frequencies.

The vibration-proof rubber composition of the present invention can yield rubber with comparatively high hardness, low impact resilience, and high loss coefficient when cured by hydrosilylation; and can form vibration-proof rubber that possesses high shape retention capabilities and that is in demand in construction, electrical/electronic applications, and other fields.

### SUMMARY OF INVENTION

A vibration-proof rubber composition, comprising (A) a polydiorganosiloxane having at least two silicon atom-bonded alkenyl groups per molecule; (B) polyisobutylene in an amount such that the weight ratio of this component to component (A) is 10:90 to 80:20; (C) 3 to 500 weight parts of an inorganic filler per 100 weight parts of components (A) and (B) combined; (D) a polyorganosiloxane having at least two silicon atom-bonded hydrogen atoms per molecule in an amount such that the ratio of the number of moles of silicon atom-bonded hydrogen atoms in this component is 0.3 to 20 in relation to the number of moles of alkenyl groups in components (A) and (B) combined; and (E) a platinum catalyst comprising 0.1 to 1000 weight parts of platinum metal atoms per 1,000,000 weight parts of components (A) and (B) combined.

### DESCRIPTION OF INVENTION

The vibration-proof rubber composition of the present invention comprises:
(A) a polydiorganosiloxane having at least two silicon atom-bonded alkenyl groups per molecule;
(B) polyisobutylene in an amount such that the weight ratio of this component to component (A) is within a range of 10:90 to 80:20;
(C) 3 to 500 weight parts of an inorganic filler, based upon 100 parts of the combined weight of components (A) and (B);
(D) a polyorganosiloxane having at least two silicon atom-bonded hydrogen atoms per molecule in an amount such that the ratio of the number of moles of silicon atom-bonded hydrogen atoms in this component is 0.3 to 20 in relation to the number of moles of alkenyl groups in components (A) and (B) combined; and
(E) a platinum catalyst comprising 0.1 to 1000 weight parts of platinum metal per 1,000,000 weight parts of components (A) and (B) combined.

The vibration-proof rubber composition of the present invention will now be described in detail. The polydiorganosiloxane of component (A), which is the principal component of the present composition, must have on average at least two silicon atom-bonded alkenyl groups per molecule. Examples of such alkenyl groups are the vinyl, allyl, butenyl, pentenyl, and hexenyl groups, with the vinyl group being preferred. No restrictions are imposed on the bonding sites of the alkenyl groups in this component, and molecular chain ends, molecular side chains, or both may be cited, with molecular chain ends being preferred. Examples of silicon atom-bonded groups other than alkenyl groups in this component include alkyl groups such as the methyl, ethyl, and propyl groups; aryl groups such as the phenyl, tolyl, and xylyl groups; aralkyl groups such as the benzyl and phenethyl groups; substituted or unsubstituted monovalent hydrocarbon groups such as the 3-chloropropyl; 3,3,3-trifluoropropyl, and other halogenated alkyl groups; and alkoxy groups present in small amounts, such as the hydroxy, methoxy, and ethoxy groups. The molecular structure of this component is substantially linear, although part of the molecular chain may be somewhat branched. No restrictions are imposed on the viscosity of this component, although at least 100 mPa ^{.} s at 25°C is preferred because of improved mechanical strength of the resulting rubber.

Examples of component (A) include dimethylvinylsiloxy end-blocked polydimethylsiloxanes, dimethylvinylsiloxy end-blocked dimethylsiloxane-methylvinylsiloxane copolymers; trimethylsiloxy end-blocked dimethylsiloxane-methylvinylsiloxane copolymers; polydiorganosiloxanes in which some or all of the vinyl groups of these polydiorganosiloxanes are substituted by allyl, butenyl, pentenyl, hexenyl, or other alkenyl groups; polydiorganosiloxanes in which some or all of the methyl groups of these polydiorganosiloxanes are substituted by alkyl groups such as ethyl and propyl, aryl groups such as phenyl, tolyl, and xylyl, aralkyl groups such as benzyl and phenethyl, halogenated alkyl groups such as 3-chloropropyl and 3,3,3-trifluoropropyl, or other substituted or unsubstituted monovalent hydrocarbons; and mixtures of two or more of these polydiorganosiloxanes.

The polyisobutylene of component (B) is intended to form vibration-proof rubber in which excellent vibration proofing characteristics are achieved at high temperatures and across a wide range of frequencies while excellent shape retention properties are preserved without markedly lowering the hardness of the rubber obtained by the hydrosilylation-induced curing of the present composition. No restrictions are imposed on the properties of this component, which may range from a liquid substance to a paste-type substance at room temperature. Expressed as number-average molecular weight, the molecular weight of the component should preferably be 300 or higher to achieve better vibration proofing characteristics and to make this component less prone to separation from component (A). The number-average molecular weight should preferably be 25,000 or less because of considerations related to miscibility with component (A).

A *t*-butyl-blocked polyisobutylene or polyisobutylene having alkenyl or epoxy groups in its molecules can be cited as the polyisobutylene of component (B). Examples of alkenyl groups are the vinyl, allyl, butenyl, pentenyl, and hexenyl groups. The bonding sites of these alkenyl groups are not subject to limitations, but molecular chain ends are preferred. In the present composition, a polyisobutylene having at least one alkenyl group per molecule, and particularly an allyl-terminated polyisobutylene, is preferred in order to give the resulting rubber good vibration proofing characteristics at higher temperatures and across a wide range of frequencies.

The amount in which component (B) is added to the present composition should preferably be such that the weight ratio of this component and component (A) falls within a range of 10:90 to 80:20, and particularly 10:90 to 60:40. This is because the vibration proofing characteristics of the resulting rubber tend to decrease if the weight of this component with respect to the weight of component (A) falls below the lower limit of the aforementioned range, and the dependence of the resulting rubber on temperature tends to increase if the weight exceeds the upper limit of this range.

No restrictions are imposed on the inorganic filler of component (C), making it possible to employ any conventional filler commonly added to silicone rubber with the aim of achieving reinforcement, heat resistance, nonflammability, non-reinforcing filling, and the like. To be able to efficiently suppress the separation of components (A) and (B), however, it is preferable to use reinforcing inorganic fillers such as fumed silica, precipitated silica, silica gels, fumed titanium oxide, or products obtained by surface-treating these inorganic fillers with organosilanes, organopolysiloxanes, and other organosilicon compounds. It is also possible to use the following as the inorganic filler of component (C): pulverized quartz, diatomaceous earth, aluminum oxide, aluminosilicates, calcium carbonate, and other non-reinforcing inorganic fillers, as well as products obtained by surface-treating these inorganic fillers with organosilanes, organopolysiloxanes, and other organosilicon compounds. Combined use of the aforementioned reinforcing inorganic fillers is preferred.

In the present composition, the amount in which component (C) is added should preferably be 3 to 500 weight parts, and particularly 5 to 100 weight parts, per 100 weight parts of components (A) and (B) combined. This is because the handling operability of the resulting composition tends to be severely compromised if the addition of component (C) exceeds the upper limit of the aforementioned range and creates a danger that component (B) will separate from the resulting composition if the addition falls below the lower limit of this range.

The polyorganosiloxane of component (D), which is the cross-linking agent of component (A) or components (A) and (B), must have at least two silicon atom-bonded hydrogen atoms per molecule. Examples of the silicon atom-bonded organic groups in this component include alkyl groups such as methyl, ethyl, and propyl; aryl groups such as phenyl, tolyl, and xylyl; aralkyl groups such as benzyl and phenethyl; substituted or unsubstituted monovalent hydrocarbon groups such as 3-chloropropyl, 3,3,3-trifluoropropyl, and other halogenated alkyl groups; and hydroxy and alkoxy groups such as the methoxy and ethoxy groups present in small amounts. No restrictions are imposed on the molecular structure of this component, which may be linear, partially branched but substantially linear, branched, cyclic, or dendritic. No particular restrictions are imposed on the viscosity of this component, although a viscosity of at least 1 mPa ^{.} s at 25°C is preferred because of the improved mechanical strength of the resulting rubber.

Examples of component (D) include dimethylhydrogensiloxy end-blocked polydimethylsiloxanes, trimethylsiloxy end-blocked polymethylhydrogensiloxanes, trimethylsiloxy end-blocked dimethylsiloxane-methylhydrogensiloxane copolymers, dimethylphenylsiloxy end-blocked methylphenylsiloxane-methylhydrogensiloxane copolymers, cyclic polymethylhydrogensiloxanes, copolymers comprising units described by formula (CH₃)₂HSiO_{½} and units described by formula SiO_{4/2}; copolymers comprising units described by formula (CH₃)₂HSiO_{½}, units described by formula (CH₃)₃SiO_{½}, and units described by formula SiO_{4/2}; polyorganosiloxanes in which some or all of the methyl groups of these polyorganosiloxanes are substituted for alkyl groups such as ethyl or propyl; aryl groups such as phenyl, tolyl, and xylyl; aralkyl groups such as benzyl and phenethyl; halogenated alkyl groups such as 3-chloropropyl and 3,3,3-trifluoropropyl; or other substituted or unsubstituted monovalent hydrocarbons; and mixtures of two or more of these polyorganosiloxanes. In particular, a polyorganosiloxane substituted with alkyl groups having 5 or greater carbon atoms is preferred because it provides the vibration-proof rubber with even higher impact resilience. Examples of alkyl groups with a carbon number of 5 or greater are pentyl, hexyl, heptyl, octyl, nonyl, decyl, undecyl, dodecyl, tridecyl, tetradecyl, pentadecyl, hexadecyl, heptadecyl, and octadecyl groups. Examples of such polyorganosiloxanes are trimethylsiloxy end-blocked dimethylsiloxane-methylhydrogensiloxane-hexadecylmethylsiloxane copolymers, trimethylsiloxy end-blocked methylhydrogensiloxane-hexadecylmethylsiloxane copolymers, and dimethylhydrogensiloxy end-blocked dimethylsiloxane-hexadecylmethylsiloxane copolymers.

In the present composition, the amount in which component (D) is added should be such that the ratio of the number of moles of silicon atom-bonded hydrogen atoms in this component with respect to the number of moles of alkenyl groups in components (A) and (B) combined falls within a range of 0.3 to 20, preferably 0.3 to 10, more preferably 0.3 to 5, and ideally 0.5 to 3. This is because the resulting rubber is prone to bubbling if the amount in which this component is added exceeds the upper limit of the aforementioned range, and the resulting composition has a tendency of being less likely to achieve adequate curing if the amount falls below the lower limit of this range.

Finally, the platinum catalyst of component (E) is a catalyst for curing the present composition. Examples of this component are platinum black, chloroplatinic acid, platinum/olefin complexes, platinum/alkenyl siloxane complexes, alcohol solutions of chloroplatinic acid, platinum supported on finely divided silica, platinum supported on activated carbon, and microparticulate thermoplastic organic resins containing these platinum catalysts, such as polycarbonate, polymethylmethacrylate, polystyrene, nylon, and silicone resins.

In the present composition, the amount in which component (E) is added should provide within a range of 0.1 to 1000 weight parts, preferably 0.1 to 500 weight parts, and ideally 1 to 100 weight parts, of platinum metal atoms per 1,000,000 weight parts of components (A) and (B) combined. This is because the resulting rubber undergoes coloration and other undesirable changes if the amount in which this component is added exceeds the upper limit of the aforementioned range, and the resulting composition tends to be less likely to be adequately cured if the amount falls below the lower limit of this range.

The present composition may be prepared by mixing the aforementioned components (A) to (E). A fine carbon black powder, fine silver powder, fine nickel powder, or other electroconductive filler may also be added for the purpose of providing the resulting vibration-proof rubber with electrical conductivity. Traces of six-member cyclic compounds or derivatives having carbon-nitrogen unsaturated bonds in their rings, such as, for example, pyridine, pyrazine, pyrimidine, and 1,3,5-triazine, may also be added to the present composition in order to further reduce the compression set of the resulting vibration-proof rubber. Known pigments, iron oxides, cerium oxide, and other heat resistance imparting agents; surfactants and other antistatic agents; fire retardants; and the like may also be added as needed to the present composition, provided the object of the present invention is not compromised.

The following compounds may also be added to the present composition with they purpose of adjusting its curing rate: 3-methyl-1-butyn-3-ol, 3,5-dimethyl-1-hexyn-3-ol, phenyl butanol, and other alkyne alcohols; 3-methyl-3-penten-1-yne, 3,5-dimethyl-3-hexen-1-yne, and other enyne compounds; and 1,3,5,7-tetramethyl-1,3,5,7-tetravinyl cyclotetrasiloxane, methyltris(methylisobutynoxy)silane, benzotriazole, acetylene-based compounds, and other reaction inhibitors.

The present composition is prepared by the uniform mixing of components (A) to (E) and optional components. Examples of methods for preparing the present composition include those in which components (A), (B), and (C) are premixed, component (D) is subsequently mixed in, and component (E) is then added; and those in which a composition obtained by premixing components (A) and (C), and a composition obtained by premixing components (B) and (D) are mixed together, and component (E) is admixed thereinto. No restrictions are imposed on the method for mixing these components during the preparation of the present composition. Examples include methods in which the mixing is carried out using a kneader mixer, Ross mixer, or other known milling apparatus.

The vibration-proof rubber composition of the present invention will now be described in detail through working examples. The viscosity referred to in the working examples is a value measured at 25°C. The resulting rubber was evaluated in the following manner.

### (Hardness)

A vibration-proof rubber composition was pressure-molded at 120°C for 20 minutes, and the type A durometer hardness of the resulting test piece (thickness: 6 mm) was measured in accordance with JIS K 6253.

### (Impact Resilience)

A vibration-proof rubber composition was pressure-molded at 120°C for 20 minutes, and the impact resilience of the resulting test piece (thickness: 12 mm) was measured in accordance with JIS K 6255.

### (Tensile Strength, Elongation)

A vibration-proof rubber composition was pressure-molded at 120°C for 20 minutes, and the tensile strength and elongation of the resulting test piece (thickness: 2 mm) were measured in accordance with JIS K 6251.

### (Loss Coefficient)

A vibration-proof rubber composition was pressure-molded at 120°C for 20 minutes, yielding a test piece with a thickness of 3 mm, a width of 13 mm, and a length of 40 mm. The loss coefficient of this cured product was measured by a dynamic viscoelasticity measurement apparatus (Dynamic Analyzer ARES™) manufactured by Rheometric.

The following starting materials were used in the working and comparative examples.

### (A) Polydiorganosiloxanes

Polydimethylsiloxane (1) - Dimethylvinylsiloxy end-blocked polydimethylsiloxane with a viscosity of 44 Pa · s (vinyl group content: 0.08 wt%).

Polydimethylsiloxane (2) - Dimethylvinylsiloxy end-blocked polydimethylsiloxane with a viscosity of 10 Pa · s (vinyl group content: 0.12 wt%).

Polydimethylsiloxane (3) - Dimethylvinylsiloxy end-blocked polydimethylsiloxane with a viscosity of 400 mPa · s (vinyl group content: 0.50 wt%).

Polydimethylsiloxane (4) - Trimethylsiloxy end-blocked polydimethylsiloxane with a viscosity of 10,000 Pa · s (vinyl group content: 0 wt%).

### (B) Polyisobutylenes

Polyisobutylene (1) - *t*-Butyl end-terminated polyisobutylene with a number-average molecular weight of 2650.

Polyisobutylene (2) - Allyl end-terminated polyisobutylene with a number-average molecular weight of 16,000.

### (D) Polyorganosiloxanes

Cross-linking Agent (1) - Polyorganosiloxane described by formula

(CH₃)₃SiO{(CH₃)HSiO}₅{(CH₃)₂SiO}₃Si(CH₃)₃

Cross-linking Agent (2) - Polyorganosiloxane described by formula

(CH₃)₃SiO{(CH₃)HSiO}₁₀{(CH₃)₂SiO}₅{(CH₃)C₁₆H₃₃SiO}₃Si(CH₃)₃

Reference Example 1. Polydimethylsiloxane (2), water, hexamethyl disilazane, and fumed silica having a BET surface area of 200 m²/g were introduced into a Ross mixer in amounts of 50, 1.5, 3, and 20 weight parts, respectively, and the ingredients were mixed for 2 hours at room temperature. The pressure inside the Ross mixer was then reduced, and the ingredients were mixed for another 2 hours at 170°C. The contents were then cooled to room temperature, and a semi-transparent paste-type rubber base (1) was obtained.

Reference Example 2. Polydimethylsiloxane (1), water, hexamethyl disilazane, and fumed silica having a BET surface area of 200 m²/g were introduced into a Ross mixer in amounts of 100, 1.5, 3, and 20 weight parts, respectively, and the ingredients were mixed for 2 hours at room temperature. The pressure inside the Ross mixer was then reduced, and the ingredients were mixed for another 2 hours at 170°C. The contents were then cooled to room temperature, and a semi-transparent paste-type rubber base (2) was obtained.

Working Example 1. The rubber base (1) prepared in Reference Example 1, polydimethylsiloxane (3), and polyisobutylene (1) were introduced into a Ross mixer in amounts of 70, 30, and 20 weight parts, respectively; the ingredients were mixed for 10 minutes at room temperature; cross-linking agent (1), 1-ethynyl-1-cyclohexanol (reaction inhibitor), and an isopropyl alcohol solution of chloroplatinic acid containing 1 wt% platinum metal were then added in amounts of 1.7 weight parts (this amount was such that the ratio of the number of moles of silicon atom-bonded hydrogen atoms in component (D) was 1.6 in relation to the alkenyl groups in components (A) and (B) combined), 0.05 weight part, and 0.2 weight part (this amount corresponded to 20 weight parts of platinum metal atoms per 1,000,000 weight parts of components (A) and (B) combined), respectively; the ingredients were mixed for 10 minutes at room temperature, and a white paste-type vibration-proof rubber composition was prepared. This composition was degassed in a vacuum and kept at 120°C for 20 minutes to effect curing, and the characteristics of the vibration-proof rubber obtained as a result of such curing were measured. The results are shown in Table 1.

Working Example 2. The rubber base (1) prepared in Reference Example 1, polydimethylsiloxane (3), and polyisobutylene (1) were introduced into a Ross mixer in amounts of 70, 10, and 40 weight parts, respectively; the ingredients were mixed for 10 minutes at room temperature; cross-linking agent (1), 1-ethynyl-1-cyclohexanol (reaction inhibitor), and an isopropyl alcohol solution of chloroplatinic acid containing 1 wt% platinum metal were then added in amounts of 1s weight part (this amount was such that the ratio of the number of moles of silicon atom-bonded hydrogen atoms in component (D) was 1.8 in relation to the alkenyl groups in components (A) and (B) combined), 0.05 weight part, and 0.2 weight part (this amount corresponded to 20 weight parts of platinum metal atoms per 1,000,000 weight parts of components (A) and (B) combined), respectively; the ingredients were mixed for 10 minutes at room temperature, and a white paste-type vibration-proof rubber composition was prepared. This composition was degassed in a vacuum and kept at 120°C for 20 minutes to effect curing, and the characteristics of the vibration-proof rubber obtained as a result of such curing were measured. The results are shown in Table 1.

Working Example 3. The rubber base (1) prepared in Reference Example 1, polydimethylsiloxane (3), and polyisobutylene (2) were introduced into a Ross mixer in amounts of 70, 10, and 40 weight parts, respectively; the ingredients were mixed for 10 minutes at room temperature; cross-linking agent (1), 1-ethynyl-1-cyclohexanol (reaction inhibitor), and an isopropyl alcohol solution of chloroplatinic acid containing 1 wt% platinum metal were then added in amounts of 2 weight parts (this amount was such that the ratio of the number of moles of silicon atom-bonded hydrogen atoms in component (D) was 1.6 in relation to the alkenyl groups in components (A) and (B) combined), 0.05 weight part, and 0.2 weight part (this amount corresponded to 20 weight parts of platinum metal atoms per 1,000,000 weight parts of components (A) and (B) combined), respectively; the ingredients were mixed for 10 minutes at room temperature, and a white paste-type vibration-proof rubber composition was prepared. This composition was degassed in a vacuum and kept at 120°C for 20 minutes to effect curing, and the characteristics of the vibration-proof rubber obtained as a result of such curing were measured. The results are shown in Table 1.

Working Example 4. The rubber base (1) prepared in Reference Example 1, polydimethylsiloxane (3), and polyisobutylene (2) were introduced into a Ross mixer in amounts of 70, 10, and 40 weight parts, respectively; the ingredients were mixed for 10 minutes at room temperature; cross-linking agent (2), 1-ethynyl-1-cyclohexanol (reaction inhibitor), and an isopropyl alcohol solution of chloroplatinic acid containing 1 wt% platinum metal were then added in amounts of 3.7 weight parts (this amount was such that the ratio of the number of moles of silicon atom-bonded hydrogen atoms in component (D) was 2.1 in relation to the alkenyl groups in components (A) and (B) combined), 0.05 weight part, and 0.2 weight part (this amount corresponded to 20 weight parts of platinum metal atoms per 1,000,000 weight parts of components (A) and (B) combined), respectively; the ingredients were mixed for 10 minutes at room temperature, and a white paste-type vibration-proof rubber composition was prepared. This composition was degassed in a vacuum and kept at 120°C for 20 minutes to effect cure, and the characteristics of the vibration-proof rubber obtained as a result of such curing were measured. The results are shown in Table 1.

Comparative Example 1. The rubber base (1) prepared in Reference Example 1, polydimethylsiloxane (3), and polydimethylsiloxane (4) were introduced into a Ross mixer in amounts of 70, 30, and 20 weight parts, respectively; the ingredients were mixed for 10 minutes at room temperature; cross-linking agent (1), 1-ethynyl-1-cyclohexanol (reaction inhibitor), and an isopropyl alcohol solution of chloroplatinic acid containing 1 wt% platinum metal were then added in amounts of 1.7 weight parts (this amount was such that the ratio of the number of moles of silicon atom-bonded hydrogen atoms in component (D) was 1.6 in relation to the alkenyl groups in components (A) , 0.05 weight part, and 0.2 weight part (this amount corresponded to 20 weight parts of platinum metal atoms per 1,000,000 weight parts of components (A) , respectively ; the ingredients were mixed for 10 minutes at room temperature, and a semi-transparent paste-type vibration-proof rubber composition was prepared. This composition was degassed in a vacuum and kept at 120°C for 20 minutes, and the characteristics of the vibration-proof rubber obtained as a result of such curing were measured. The results are shown in Table 1.

Comparative Example 2. The rubber base (2) prepared in Reference Example 2, cross-linking agent (1), 1-ethynyl-1-cyclohexanol (reaction inhibitor), and an isopropyl alcohol solution of chloroplatinic acid containing 1 wt% platinum metal were introduced into a Ross mixer in amounts of 120 weight parts, 0.9 weight part (this amount was such that the ratio of the number of moles of silicon atom-bonded hydrogen atoms in component (D) was 2.2 in relation to the alkenyl groups in component (A)), 0.05 weight part, and 0.2 weight part (this amount corresponded to 20 weight parts of platinum metal atoms per 1,000,000 weight parts of component (A)), respectively; the ingredients were mixed for 10 minutes at room temperature, and a semi-transparent paste-type vibration-proof rubber composition was prepared. This composition was degassed in a vacuum and kept at 120°C for 20 minutes to effect curing, and the characteristics of the vibration-proof rubber obtained as a result of such curing were measured. The results are shown in Table 1.

**Table 1**

| | Working Example 1 | Working Example 2 | Working Example 3 | Working Example 4 | Comparative Example 1 | Comparative Example 2 |
|---|---|---|---|---|---|---|
| Hardness | 23 | 21 | 24 | 24 | 20 | 21 |
| Tensile strength (MPa) | 5.6 | 4.4 | 4.9 | 5.7 | 5.2 | 7.4 |
| Elongation (%) | 540 | 690 | 740 | 660 | 510 | 720 |
| Impact resilience (%) | 41 | 23 | 33 | 31 | 60 | 63 |
| Loss coefficient | | | | | | |
| 20°C, 0.1 Hz | 0.13 | 0.17 | 0.22 | 0.22 | 0.08 | 0.08 |
| 20°C, 1 Hz | 0.16 | 0.21 | 0.31 | 0.31 | 0.1 | 0.1 |
| 20°C, 10 Hz | 0.25 | 0.32 | 0.34 | 0.34 | 0.17 | 0.16 |
| 50°C, 10 Hz | 0.16 | 0.21 | 0.3 | 0.3 | 0.11 | 0.1 |

It can be seen that in Working Examples 1 to 4 the rubber hardness is equal to or greater than in Comparative Examples 1 and 2, but the impact resilience is lower and the loss coefficient is higher. A comparison of Working Examples 2 and 3 shows that although the same amount (40 weight parts) of component (B) is added, the loss coefficient under the adopted measurement conditions is higher in Working Example 3, in which an allyl-blocked polyisobutylene is used as component (B). A comparison of Working Examples 3 and 4 shows that although the rubber hardness is the same, the impact resilience is lower in Working Example 4, in which a polyorganosiloxane (cross-linking agent (2)) containing hexadecyl groups was added as component (D).

## Claims

1. A vibration-proof rubber composition comprising:
(A) a polydiorganosiloxane having at least two silicon atom-bonded alkenyl groups per molecule;
(B) polyisobutylene in an amount such that the weight ratio of this component to component (A) is 10:90 to 80:20;
(C) 3 to 500 weight parts of an inorganic filler per 100 weight parts of components (A) and (B) combined;
(D) a polyorganosiloxane having at least two silicon atom-bonded hydrogen atoms per molecule in an amount such that the ratio of the number of moles of silicon atom-bonded hydrogen atoms in this component is 0.3 to 20 in relation to the number of moles of alkenyl groups in components (A) and (B) combined; and
(E) a platinum catalyst comprising 0.1 to 1000 weight parts of platinum metal atoms per 1,000,000 weight parts of components (A) and (B) combined.

2. A vibration-proof rubber composition as defined in Claim 1 where component (B) comprises a polyisobutylene having at least one alkenyl group per molecule.

3. A vibration-proof rubber composition as defined in Claim 1 where component (D) comprises a polyorganosiloxane having alkyl groups comprising 5 or greater carbon atoms.

4. A vibration-proof rubber composition as defined in Claim 1 where component (B) comprises a polyisobutylene having at least one alkenyl group per molecule, and component (D) is a polyorganosiloxane comprising alkyl groups comprising 5 or greater carbon atoms.

5. A vibration-proof rubber composition as defined in Claim 1 where the alkenyl groups of component (A) are vinyl.

6. A vibration-proof rubber composition as defined in Claim 1 where component (A) has a viscosity of at least 100 mPa·s at 25oC.

7. A vibration-proof rubber composition as defined in Claim 1 where component (B) as a number-average molecular weight within the range of 300 to 25,000 and is allyl-terminated.

8. A vibration-proof rubber composition as defined in Claim 1 where the ratio of component (B) to component (A) is within a range of 10:90 to 60:40.

9. A vibration-proof rubber composition as defined in Claim 1 comprising 5 to 100 weight parts component (C) per 100 weight parts of component (A) and (B) combined.

10. A vibration-proof rubber composition as defined in Claim 1 where the number of moles of silicon atom-bonded hydrogen atoms in component (D) to the number of moles of 0alkenyl groups in components (A) and (B) combined is within a range of 0.5 to 3.
